# EUROPÄISCHE PATENTSCHRIFT

(11) **EP 1 652 729 B1**
(45) Veröffentlichungstag und Bekanntmachung des Hinweises auf die Patenterteilung: **09.05.2007**
(21) Anmeldenummer: 05004257.1
(22) Anmeldetag: 26.02.2005
(51) Int. Cl.: B60R 11/02

(54) **Modularer Geräteträger mit Mehrzweck-Zwischenbaubox für Kleincomputer, Handys und dergleichen**
Modular article holder with multi-purpose intermediate box for personal digital assistants (PDA), mobile phones or the like
Support modulaire d'équipement avec boîte intermédiaire multi-fonctionnelle pour des assistants numériques personnels, téléphones mobiles etc.

(30) Priorität: 26.10.2004 DE 102004052160
(43) Veröffentlichungstag der Anmeldung: 03.05.2006
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- EP-A- 0 459 346
- DE-U1- 20 316 061
- DE-U1- 29 715 910
- US-A- 5 606 608
- US-A- 5 799 914
- US-A- 5 860 824
- US-A1- 2004 028 219

## Beschreibung

Kleincomputer im Taschenformat, üblicherweise als PDA (Personal Digital Assistent) bezeichnet, mobile Navigationsgeräte, Handys, und Kombinationen solcher Geräte werden häufig in Kraftfahrzeugen benutzt. Dazu sind Gerätehalter bekannt, die einen an der Windschutzscheibe, am Armaturenbrett oder einer sonstigen geeigneten Stelle des Fahrzeugs anzubringenden Befestigungsfuß, einen gegebenenfalls beweglichen Tragarm, z.B. in Gestalt eines sogenannten Schwanenhalses, und einen daran angeordneten Gerätehalter umfassen, der das betreffende Gerät herausnehmbar aufnimmt. Es ist bei solchen Geräteträgern auch bekannt, den Gerätehalter abnehmbar und damit austauschbar am Tragarm anzuordnen.

Die Verwendung von Geräten der genannten Art im Auto in Verbindung mit solchen Geräteträgern ist zwar sehr vorteilhaft, weil die Geräte mobil sind und vom Benutzer überallhin mitgenommen und mittels des Geräteträgers im Auto leicht und zweckmäßig benutzt werden können, jedoch gibt es auch einige Gesichtspunkte, die bei der Benutzung solcher Geräte mit Geräteträger im Auto nicht ganz befriedigen können. So ist beispielsweise die akustische Ansage eines mobilen Navigationsgeräts über den geräteeigenen Kleinstlautsprecher im Auto bei Fahrgeräuschen, Windgeräuschen und Verkehrslärm nur schlecht und schwer hörbar, und auch die Verkabelung solcher Geräte kann störend sein, z.B. die Notwendigkeit, eine GPS-Antenne außerhalb der Sichtfeldbeeinträchtigung des Fahrers an der Windschutzscheibe oder einem sonst geeigneten Ort anzubringen, wobei die Gefahr des Verhängens und der Beschädigung des lose verlaufenden Antennenkabels bei Bewegungen oder beim Hantieren des Fahrers oder Beifahrers mit Gegenständen besteht.

Aufgabe der Erfindung ist es, eine Verbesserung zu schaffen, die den Gebrauch von Geräten der genannten Art in Verbindung mit einem Geräteträger in Fahrzeugen bequemer und effizienter macht.

Diese Aufgabe wird gemäß der Erfindung durch den im Anspruch 1 angegebenen modularen Geräteträger mit Mehrzweck-Zwischenbaubox gelöst. Vorteilhafte Ausgestaltungen und Weiterbildungen der Erfindung sind Gegenstand der Unteransprüche.

Ein modularer Aufbau eines Geräteträgers ist zwar aus der US 2004/0028 219 A1 an sich bekannt, allerdings handelt es sich dort nur um einen einstellbaren Halter für ein mobiles Telefon mit einer Freisprecheinrichtung. Die dort dargestellte und beschriebene Anordnung besteht aus einem Tragarm, die in eine elektrische Steckdose eines Fahrzeugs einsteckbar ist und mehrere aufeinanderfolgende Gelenke hat, um das freie Ende des Tragarms in die gewünschte Position zu bringen, weiter aus einer mit Lautsprecher, Mikrofonanschluß und Kopfhöreranscbluss sowie einer eingebauten Antenne versehenen Box, die mittels einer Schnellkupplung an das freie Ende des Tragarms ankuppelbar ist, und aus einem Telefonhalter, der über eine andere Schnellkupplungsverbindung auf der anderen Seite der Box ankuppelbar ist, um das Mobiltelefon halten zu können.

Der modulare Geräteträger nach der Erfindung besteht also aus einem im Fahrzeug an geeigneter Stelle, z.B. an der Windschutzscheibe oder am Armaturenbrett oder an der Mittelkonsole anzubringenden Modul, der einen Befestigungsfuß und einen damit verbundenen Tragarm umfaßt, weiter aus einem durch den Gerätehalter, der das jeweilige Gerät herausnehmbar aufnimmt, gebildeten Modul, und einen durch eine Mehrzweck-Zwischenbaubox gebildeten Modul, der zwischen dem Gerätehalter-Modul und den Befestigungsfuß/Tragarm-Modul, also zwischen den Gerätehalter und den Tragarmkopf, eingebaut bzw. einbaubar ist.

Insbesondere kann die Mehrzweck-Zwischenbaubox als Lautsprecherbox ausgebildet sein, die (mindestens) einen Lautsprecher und einen Lautsprecherverstärker enthält, um die akustischen Ansagen eines Navigationsgeräts verstärkt und mit guter Lautstärke wiederzugeben- Zur Einstellung der Lautstärke kann an der Box ein Lautstärkeregler angeordnet sein. Zwischen der Rückseite der Box und der Frontseite des Tragarmkopfs ist durch entsprechende Gestaltung der Verbindungsmittel ein Abstand vorgesehen, damit der Schall durch Schallaustrittsöffnungen an der Rückseite der Box austreten kann. Eine Tonsignaleingangsbuchse an der Seite der Box dient zur Aufnahme des Audiosignals des Navigationsgeräts über ein Tonausgangskabel.

Vorzugsweise sind aber mehrere Funktionen in der Box untergebracht. Insbesondere kann die Box außerdem als Stromversorgungs- oder Stromdurchleitungsgerät für die Stromversorgung des vom Gerätehalter aufgenommenen Geräts ausgebildet sein und dazu eine Stromausgangsbuchse, die über ein Kabel mit einer Stromversorgungsbuchse des Geräts verbindbar ist, und eine Stromeingangsbuchse aufweisen, die über ein Kabel mit dem Zigarettenanzünder oder einer separaten Steckdose im Auto verbindbar ist. Weiter kann die Box als Antennengerät für eine GPS-Antenne dienen. Dazu kann die Box eine Buchse zum Einstecken einer GPS-Antenne aufweisen, und die GPS-Antenne ist vorzugsweise schwenkbar und drehbar mit einem Antennensockel verbunden, der seinerseits fest mit einem Stecker zum Einstecken in die Antennenbuchse der Box verbunden ist. Das Navigationsgerät ist über ein Antennenkabel mit einer zweiten Antennenbuchse der Box verbindbar.

Ein Ausführungsbeispiel der Erfindung wird nachstehend unter Bezugnahme auf die anliegenden Zeichnungen mehr im Einzelnen beschrieben. In den Zeichnungen zeigt:
- Fig. 1: in Seitenansicht einen Geräteträger nach der Erfindung mit einem im Gerätehalter befindlichen Gerät und einer GPS-Antenne, wobei allerdings der Übersichtlichkeit halber die äußere Verkabelung weggelassen ist,
- Fig. 2: in auseinandergezogener Darstellung die Zwischenbaubox und den GPS-Antennenmodul in Seitenansicht,
- Fig. 3: die Zwischenbaubox mit aufgestecktem Antennenmodul in Rückansicht,
- Fig. 4: die Zwischenbaubox mit aufgestecktem Antennenmodul in der anderen Seitenansicht,
- Fig. 5: die Zwischenbaubox mit aufgestecktem Antennenmodul in Frontansicht,
- Fig. 6: die Zwischenbaubox ohne Antennenmodul in Draufsicht,
- Fig. 7: die Zwischenbaubox mit aufgestecktem Antennenmodul in Draufsicht, und
- Fig. 8: die Zwischenbaubox mit aufgestecktem Antennenmodul in Untersicht.

Alle Zeichnungen sind schematisch gehalten, um den Aufbau der erfindungsgemäßen Anordnung in ihren wesentlichen Merkmalen unter Verzicht auf unnötige, nicht zur Erfindung gehörende Einzelheiten zu erläutern.

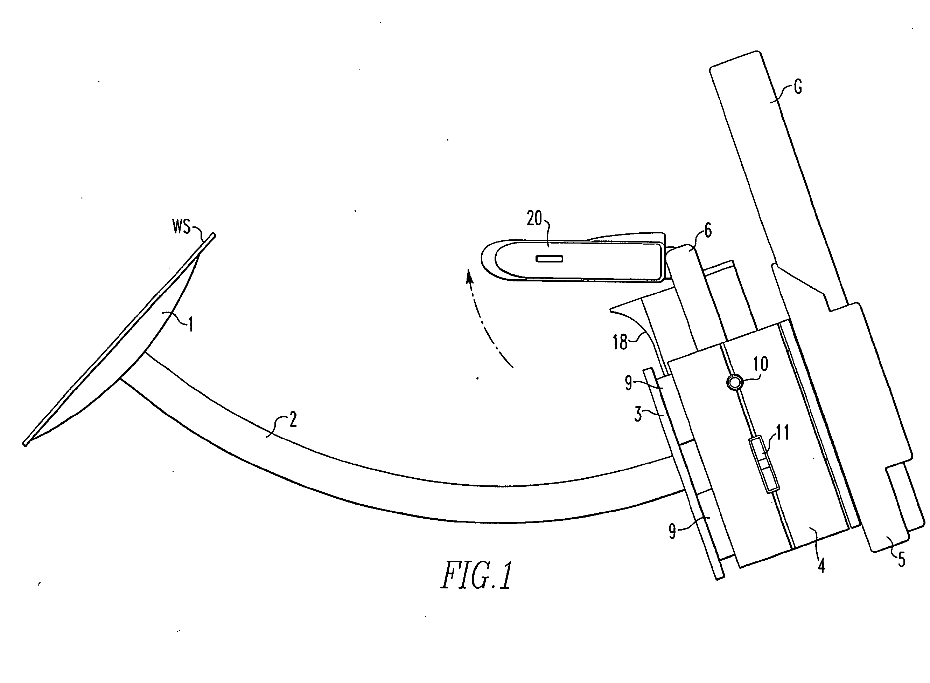

Fig. 1 zeigt einen kompletten modularen Geräteträger nach der Erfindung mit angesteckter GPS-Antenne und einem eingesteckten Gerät.

Der modulare Geräteträger besteht aus einem Tragarmmodul mit einem Befestigungsfuß 1, der als Saugfuß ausgebildet und an der Windschutzscheibe WS eines Fahrzeugs angebracht sein kann, weiter aus einem biegsamen Tragarm 2, und einem an dessen freien Ende angeordneten Tragarmkopf 3 in Gestalt einer Montageplatte. Es versteht sich, dass der Tragarmmodul auch in anderer Weise ausgebildet sein kann, beispielsweise mit einem Tragarm in Gestalt einer starren Säule auf einem als Befestigungsfuß ausgebildeten Sockel und mit einem als Montageplatte ausgebildeten Kopf. Solche Tragarmmodule sind bei herkömmlichen Geräteträgern in verschiedener Form an sich bekannt.

Bei dem erfindungsgemäßen modularen Geräteträger ist auf dem Tragarmkopf 3 eine Zwischenbaubox 4 aufgesetzt, die im Folgenden in ihren Einzelheiten noch beschrieben wird, und auf die Zwischenbaubox 4 ist ein Gerätehalter 5 aufgesetzt. Der Gerätehalter ist zur Aufnahme des jeweiligen Geräts G ausgebildet und kann daher in seiner konkreten Form und seinen Abmessungen dem aufzunehmenden Gerät entsprechend ausgebildet sein.

Bei herkömmlichen Geräteträgern mit abnehmbaren Gerätehalter sitzt der Gerätehalter unmittelbar auf dem Tragarmkopf. Bei der erfindungsgemäßen Anordnung ist zwischen den Tragarmkopf 3 und dem Gerätehalter 5 die Mehrzweck-Zwischenbaubox 4 zwischengesetzt. Auf die Zwischenbaubox 4 ist beim dargestellten Ausführungsbeispiel außerdem ein GPS-Antennenmodul 6 aufgesteckt.

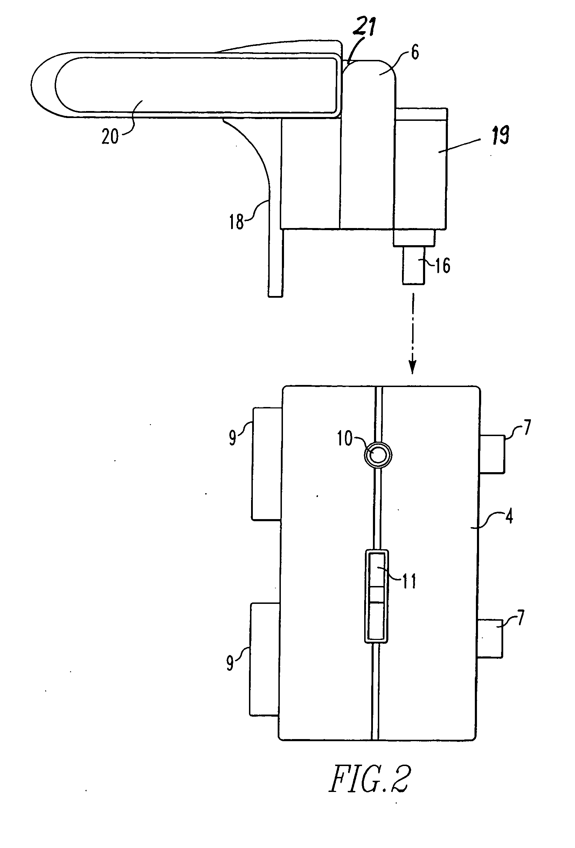

Die in den Fig. 2 bis 8 von allen Seiten dargestellte Zwischenbaubox dient beim Ausführungsbeispiel als aktive Lautsprecherbox, als Stromversorgungsgerät und als Antennengerät.

Der Tragarmkopf 3, die Zwischenbaubox 4 und der Gerätehalter 5, die alle vorzugsweise aus Kunststoff bestehen, sind jeweils mittels eines Schnellkupplungsmechanismus miteinander zu verbinden. Dieser Schnellkupplungsmechanismus besteht jeweils aus einer Anzahl von vorzugsweise vier hakenartigen Vorsprüngen 7 mit L-förmigem Querschnitt am einen Teil und komplementären Aufnahmeschlitzen 8 am anderen Teil, die so geformt sind, dass sie ein Einstecken der Vorsprünge 7 und dann durch eine kleine Verschiebung ein vorzugsweise rastendes oder klemmendes Arretieren der Vorsprünge 7 mit ihren stehenden Schenkeln ermöglicht, wobei die liegenden Schenkel der Vorsprünge 7 die die Schlitze 8 aufweisende Wand des betreffenden Teils hintergreifen. Eine solche Schnellkupplungsanordnung ist bereits an sich bekannt, nämlich zur Verbindung des Gerätehalters (5) mit dem Tragarmkopf (3) bekannter Geräteträger mit abnehmbarem bzw. auswechselbarem Gerätehalter. Die Schnellkupplungsanordnungen zwischen dem Gerätehalter 5 und der Zwischenbaubox 4 sowie zwischen der Zwischenbaubox 4 und dem Tragarmkopf 3 sind vorzugsweise identisch und hinsichtlich Anordnung, Bemessung und Orientierung auch vorzugsweise identisch mit der bei bekannten Geräteträgern bereits angewendeten Schnellkupplungsanordnung zwischen Gerätehalter und Tragarmkopf, so dass solche bekannte Gerätehalter mit der Zwischenbaubox nach der Erfindung ohne weiteres nachrüstbar sind.

An der Zwischenbaubox 4 sind, wie die Seitenansicht nach Fig. 2 zeigt, die hakenförmigen Vorsprünge 7 an der Frontseite und die Einführschlitze 8 (nicht sichtbar) an vorstehenden Füßen 9 an der Rückseite angeordnet. An der sichtbaren Seite der Zwischenbaubox 4 ist eine Audiosignal-Eingangsbuchse 10 und ein Lautstärkeregler 11 angeordnet.

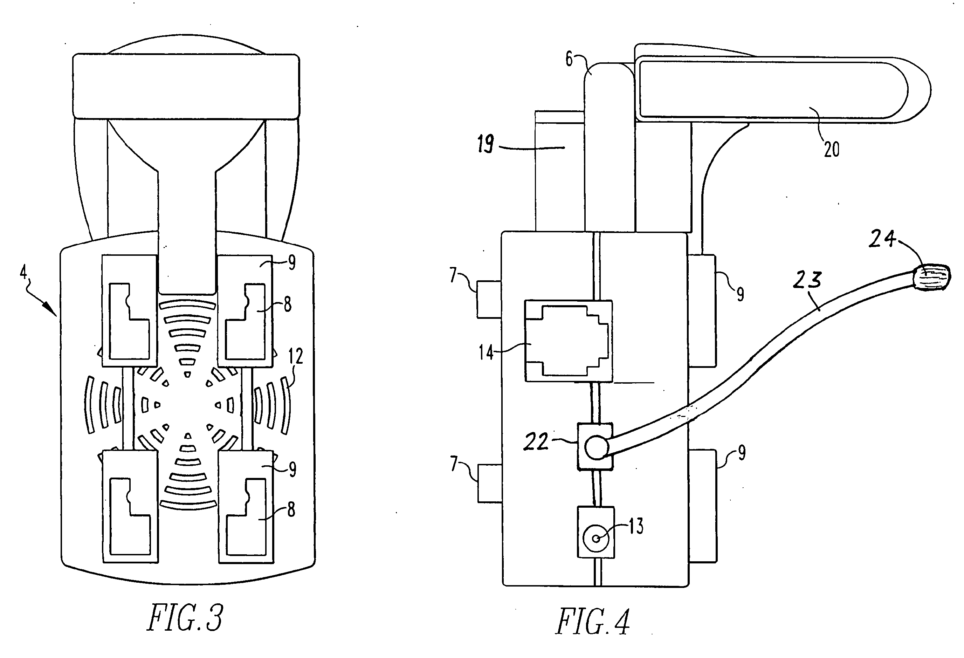

In Fig. 3 ist die Rückseite der Zwischenbaubox mit den Füßen 9 und den darin gebildeten Einführschlitzen 8 für die am Tragarmkopf 3 angeordneten hakenartigen bzw. krallenartigen Vorsprünge sichtbar. Weiter weist die Zwischenbaubox 4 an dieser sichtbaren Rückseite Schallaustrittsschlitze 12 auf, um den von einem in der Box eingebauten Lautsprecher erzeugten Schall abzustrahlen. Durch die Füße 9 wird ein räumlicher Abstand der mit den Schallschlitzen 12 versehenen Zwischenbaubox 4 von der den Tragarmkopf 3 bildenden Montageplatte erzeugt, so dass der Schall ungehindert austreten kann und von der Montageplatte reflektiert wird. Es versteht sich, dass die Anordnung auch so getroffen sein kann, dass Schallaustrittsschlitze an der Vorderseite der Zwischenbaubox angeordnet sind und dort für einen Abstand zum Gerätehalter gesorgt wird, aber die Schallabstrahlung von der Rückseite hat sich als günstiger erwiesen. Natürlich können auch Schallaustrittsöffnungen an den Seiten der Zwischenbaubox vorgesehen sein. Die jeweilige praktische Ausführung wird davon abhängen, welche Funktionen insgesamt in der Zwischenbaubox 4 untergebracht sind und wie die Platzverhältnisse es zulassen. Die Seitenflächen der Zwischenbaubox werden jedoch, wie im Folgenden noch dargestellt wird, hauptsächlich zur Anordnung der notwendigen Steckbuchsen benötigt.

Fig. 4 zeigt die Zwischenbaubox in Seitenansicht von der mit Bezug auf Fig. 2 anderen Seite der Zwischenbaubox. Dort sind eine Stromeingangsbuchse 13 und eine GPS-Antenneneingangsbuchse 14 vorgesehen. An die Stromeingangsbuchse 13 ist ein Stromspeisekabel anschließbar, das mit einer Steckdose oder einer als Steckdose benutzten Zigarettenanzünderdose des Fahrzeugs zu verbinden ist. In die GPS-Antenneneingangsbuchse 14 kann ein GPS-Antennenkabel einer im Fahrzeug installierten, beispielshalber an der Windschutzscheibe oder am Armaturenbrett angebrachten GPS-Antenne eingesteckt werden.

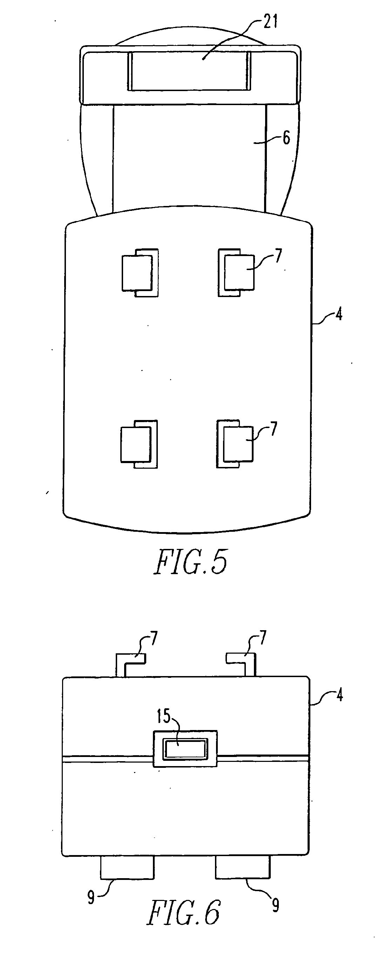

Fig. 5 zeigt die Frontseite der Zwischenbaubox 4 mit den daran angeordneten hakenartigen Vorsprüngen 7, die mit entsprechenden Aufnahmeschlitzen im Gerätehalter 5 zusammenwirken.

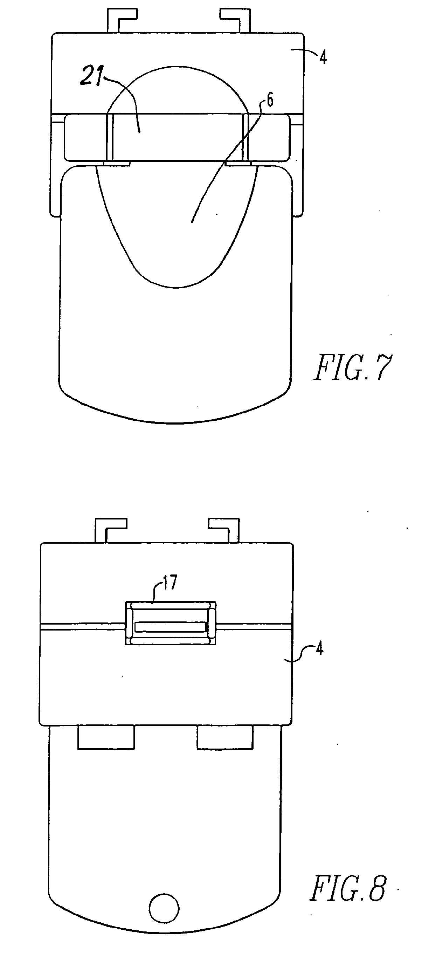

Fig. 6 zeigt die Zwischenbaubox 4 in Draufsicht, wobei wiederum die Füße 9 gut sichtbar sind und die hakenartigen Vorsprünge 7 an der Vorderseite in ihrer Querschnittsform deutlich erkennbar sind. An der Oberseite ist eine GPS-Antennenbuchse 15 in Gestalt einer Mini-USB-Buchse angeordnet, in welche ein entsprechender Mini-USB-Stecker 16 am GPS-Antennenmodul 6 einsteckbar ist, wenn auf die Zwischenbaubox der GPS-Antennenmodul 6 aufgesteckt wird, der in allen Zeichnungsfiguren außer Fig. 6 in verschiedenen Ansichten dargestellt ist.

Fig. 7 zeigt eine Draufsicht ähnlich Fig. 6, wobei jedoch nunmehr der GPS-Antennenmodul 6 aufgesteckt ist.

Fig. 8 zeigt eine Untersicht der Zwischenbaubox 4 mit aufgestecktem GPS-Antennenmodul 6. An der Unterseite der Zwischenbaubox 4 ist eine Lade/Daten-Buchse 17 angeordnet, in die ein entsprechender Stecker eines Lade/Daten-Kabels vom Gerät G einsteckbar ist. Über diese Lade/Daten-Buchse 17 erhält das Gerät G aus der Zwischenbaubox 4 zum einen den Speisestrom zum Betrieb des Geräts G bzw. zum Aufladen von dessen Batterien und zum anderen GPS-Antennendaten. Diese Daten können von einem aufgesteckten Antennenmodul 6 herrühren oder von einer an anderer Stelle angeordneten GPS-Antenne, die über ein Datenkabel mit der seitlich an der Zwischenbaubox angeordneten Antenneneingangsbuchse 14 verbunden ist.

Im Inneren der Zwischenbaubox 4 ist, wie schon erwähnt, ein Lautsprecher untergebracht sowie ein entsprechender Lautsprecherverstärker, der mit dem seitlich angeordneten Lautstärkeregler 10 einstellbar ist, so dass die Zwischenbaubox eine aktive Lautsprecherbox darstellt. Die Stromversorgung bezieht der Lautsprecherverstärker über die Stromeingangsbuchse 13.

Weiter ist die Zwischenbaubox 4 des beschriebenen Ausführungsbeispiel als Stromversorgungsgerät ausgebildet, das den über die Stromeingangsbuchse 13 von einer Fahrzeugsteckdose bezogenen Strom spannungsangepasst über die Ausgangsbuchse 17 an das betreffende Gerät G liefert sowie, wie schon gesagt, zur eigenen Stromversorgung des Lautsprecherverstärkers bereitstellt.

Schließlich ist die Zwischenbaubox nach dem Ausführungsbeispiel als Antennengerät ausgebildet, das zum einen die Möglichkeit des Aufsteckens eines GPS-Antennenmoduls direkt auf die Zwischenbaubox ermöglicht oder den Anschluß einer anderweitig angeordneten GPS-Antenne über die Antenneneingangsbuchse ermöglicht. Über die in der Zwischenbaubox 4 untergebrachte Stromversorgung ist auch die jeweilige GPS-Antenne mit Speisestrom versorgbar, und die jeweils von der Antenne kommenden Datensignale werden durch eine entsprechende Datenleitung innerhalb der Zwischenbaubox zur Ausgangsbuchse 17 weitergeleitet.

Es versteht sich, dass die beschriebenen Funktionen nur beispielhaft sind und eine Zwischenbaubox nach der Erfindung auch nur einen Teil der Funktionen beinhalten kann sowie auch weitere Funktionen zusätzlich oder alternativ bereitstellen kann, je nach Bedarf und nach Art des zu versorgenden Geräts G.

Der GPS-Antennenmodul 6, der in Fig. 2 separat und in den Fig. 3 bis 7 sowie 8 in Verbindung mit der Zwischenbaubox 4 dargestellt ist, weist einen Sockel 18 auf, an welchem der Mini-USB-Stecker 16 fest angeordnet ist. Auf diesem Sockel 18 ist ein Antennenträger 19 drehbar angeordnet, der ein Antennenelement 20 über eine Scharniergelenkanordnung 21 schwenkbar trägt. Das Antennenelement 20 ist also sowohl in seiner Neigung verstellbar als auch in seiner Drehposition veränderbar auf dem Sockel 18 zur Optimierung des Empfangs einstellbar.

Weiter kann, wie in Fig. 4 eingezeichnet ist, an der Zwischenbaubox 4 ein Mikrofoneingang 22 und ein Mikrofonträger 23 mit einem Mikrofon 24 angeordnet sein. Der Mikrofonträger 23 kann als biegsamer "Schwanenhals" ausgebildet sein, um das an seinem freien Ende befindlichen Mikrofon 24 in die optimale Stellung zu bringen. Der Mikrofonträger kann beispielsweise über eine Steckverbindung lösbar mit dem Mikrofonanschluß 22 der Zwischenbaubox 4 verbunden sein, wobei die Steckverbindung, damit sie drehfest ist, mit einer mechanischen Drehsicherung in Gestalt einer Nase oder beispielsweise mit Rechtecksteckverbindungselementen ausgebildet sein kann. Das Mikrofon 24 kann zum Freisprechen beim Telefonieren dienen.

Statt der Lade/Datenbuchse 17 können auch getrennte Strom- und Datenausgangsbuchsen vorgesehen sein.

## Patentansprüche

1. Geräteträger für Kleincomputer, Navigationsgeräte, Mobiltelefone und dg1., bestehend aus einem Fuß (1), einem Gerätehalter (5) und einem dazwischen angeordneten Trägerteil in Gestalt eines Tragarms (2), einer Säule oder einer Kombination hiervon,
wobei der Geräteträger modular aufgebaut ist und einen Tragarmmodul, der aus dem Fuß (1), dem damit verbundenen Trägerteil und einem an diesem angeordneten Kopf (3) besteht, weiter einen durch den Gerätehalter (5) gebildeten Gerätehaltermodul und einen wahlweise zwischen diesen beiden Modulen einsetzbaren Zwischenbaumodul (4) umfasst, der zur Aufnahme zusätzlicher Funktionselemente und/oder Verbindungseinrichtungen und/oder Einstellorganen dient,
wobei der Zwischenbaumodul jeweils über Schnellkupplungsverbindungen mit dem Tragarmmodul und dem Gerätehaltermodul verbindbar ist, und identische Schnellkupplungen zur Verbindung des Zwischenbaumoduls mit dem Tragarmmodul und mit dem Gerätehaltermodul vorgesehen sind, derart, dass der Gerätehaltermodul unter Weglassung des Zwischenbaumoduls direkt mit dem Tragarmmodul verbindbar ist.

2. Geräteträger nach Anspruch 1, wobei der Kopf (3) des Trägerteils als Montageplatte ausgebildet ist.

3. Geräteträger nach Anspruch 1 oder 2, wobei das Trägerteil als biegsamer Tragarm (2) ausgebildet ist.

4. Geräteträger nach einem der Ansprüche 1 bis 3, wobei der Zwischenbaumodul als Lautsprecherbox ausgebildet ist und mindestens einen Lautsprecher und einen Lautsprecherverstärker enthält.

5. Geräteträger nach einem der Anspruche 1 bis 4, wobei der Zwischenbaumodul als Träger für einen GPS-Antennenmodul (6) ausgebildet ist.

6. Geräteträger nach Anspruch 5, wobei der GPS-Antennenmodul (6) ein Antennenelement (20) aufweist, das über eine Scharniergelenkanordnung (21) und/oder einen drehbaren Sockel (18) schwenkbar und/oder drehbar mit dem Zwischenbaumodul verbunden ist.

7. Geräteträger nach einem der Ansprüche 1 bis 6, wobei ein Mikrofon (24) über einen Mikrofonenträger, insbesondere in Gestalt eines biegsamen Schwanenhalses, mit dem Zwischenbaumodul (4) verbunden ist.

8. Geräteträger nach einem der Ansprüche 5 bis 7, wobei der Antennenmodul und/oder der Mikrofonträger über eine Steckverbindung lösbar mit dem Zwischenbaumodul (4) verbunden ist.

9. Geräteträger nach einem der Ansprüche 1 bis 8, wobei der Zwischenbaumodul mindestens eines der Elemente Antenneneingangs- und Antennenausgangsbuchse, Antennenmodul-Einsteckbuchse (15), Stromeingangs- und -Ausgangsbuchse, Audiosignaleingangsbuchse (10), Lautstärkeregler (11) und kombinierte Lade-Daten-Ausgangsbuchse (17) sowie Stromdurchleitungs- und Datendurchleitungsverkabelungen aufweist.

10. Geräteträger nach einem der Ansprüche 1 bis 9, wobei die Schnellkupplungen jeweils Anordnungen von hakenartigen Vorsprüngen (7) am jeweils einen Modul und komplementäre Aufnahmeschlitze zur rastenden Aufnahme der Vorsprünge im jeweils anderen Modul aufweisen.

## Claims

1. A device mount for small computers, navigation devices, mobile telephones and the like, consisting of a base (1), a device holder (5), and an intermediately disposed carrier part in the form of a supporting arm (2), a column or a combination thereof,
wherein the device mount is of modular design and comprises a supporting arm module, which consists of the base (1), the carrier part connected thereto and a head (3) disposed on said carrier part, said device mount further comprising a device holder module, which is constituted by the device holder (5), and an intermediate module (4), which is optionally insertable between these two modules and serves to accommodate additional functional elements and/or connecting means and/or adjusting elements,
the intermediate module being connectable to the supporting arm module and the device holder module by means of respective quick-coupling connections, and identical quick couplings being provided for connecting the intermediate module to the supporting arm module and to the device holder module, in such a manner that the device holder module can be connected directly to the supporting arm module, with omission of the intermediate module.

2. The device mount according to claim 1, wherein the head (3) of the carrier part is realized as a mounting plate.

3. The device mount according to either of claims 1 or 2, wherein the carrier part is realized as a flexible supporting arm (2).

4. The device mount according to any one of claims 1 to 3, wherein the intermediate module is realized as a loudspeaker box and contains at least one loudspeaker and one loudspeaker amplifier.

5. The device mount according to any one of claims 1 to 4, wherein the intermediate module is realized as a mount for a GPS antenna module (6).

6. The device mount according to claim 5, wherein the GPS antenna module (6) has an antenna element (20) which, by means of a hinge joint arrangement (21) and/or a rotatable base (18), can be pivotally and/or rotatably connected to the intermediate module.

7. The device mount according to any one of claims 1 to 6, wherein a microphone (24) is connected to the intermediate module (4) by means of a microphone mount, in particular in the form of a flexible swan-neck.

8. The device mount according to any one of claims 5 to 7, wherein the antenna module and/or the microphone mount are/is detachably connected to the intermediate module (4) by means of a plug-in connection.

9. The device mount according to any one of claims 1 to 8, wherein the intermediate module has at least one of the elements antenna input socket and antenna output socket, antenna module insertion socket (15), current input socket and current output socket, audio signal input socket (10), volume control (11) and combined charging/data output socket (17), as well as current connection and data connection cables.

10. The device mount according to any one of claims 1 to 9, wherein the quick couplings have respective arrangements of hook-type projections (7) on respectively one module and, in the respectively other module, have complementary receiving slots for receiving the projections in a latching manner.

## Revendications

1. Support d'appareil pour mini-ordinateurs, appareils de navigation, téléphones mobiles et similaires, constitué d'un pied (1), d'une console d'appareil (5) et d'une pièce de support disposée entre ceux-ci sous la forme d'un bras porteur (2), d'une colonne ou d'une combinaison de ceux-ci,
moyennant quoi le support d'appareil est conçu de manière modulaire et comprend un module de bras porteur, qui est constitué du pied (1), de la pièce de support reliée à celui-ci et d'une tête (3) disposée sur celui-ci, puis un module de console d'appareil formé par la console d'appareil (5) et un module intercalaire (4) pouvant être inséré au choix entre ces deux modules, lequel sert à recevoir des éléments de fonctionnement supplémentaires et/ou des dispositifs de liaison et/ou des organes de réglage,
moyennant quoi le module intercalaire peut être respectivement relié par des liaisons à raccord rapide au module de bras porteur et au module de console d'appareil, et des raccords rapides identiques sont prévus pour la liaison du module intercalaire au module de bras porteur et au module de console d'appareil, de telle sorte que le module de console d'appareil puisse être relié directement au module de bras porteur en omettant le module intercalaire.

2. Support d'appareil selon la revendication 1, moyennant quoi la tête (3) de la pièce de support est réalisée comme une plaque de montage.

3. Support d'appareil selon la revendication 1 ou 2, moyennant quoi la pièce de support est réalisée comme un bras porteur (2) flexible.

4. Support d'appareil selon l'une des revendications 1 à 3, moyennant quoi le module intercalaire est réalisé comme une enceinte de haut-parleur et contient au moins un haut-parleur et un amplificateur de haut-parleur.

5. Support d'appareil selon l'une des revendications 1 à 4, moyennant quoi le module intercalaire est réalisé comme un support d'un module d'antenne GPS (6).

6. Support d'appareil selon la revendication 5, moyennant quoi le module d'antenne GPS (6) présente un élément d'antenne (20), qui est relié par un dispositif d'articulation à charnière (21) et/ou un socle (18) rotatif de manière pivotante et/ou rotative au module intercalaire.

7. Support d'appareil selon l'une des revendications 1 à 6, moyennant quoi un microphone (24) est relié par un support de microphone, notamment sous la forme d'un col de cygne flexible, au module intercalaire (4).

8. Support d'appareil selon l'une des revendications 5 à 7, moyennant quoi le module d'antenne et/ou le support de microphone est relié par une liaison enfichable de manière amovible au module intercalaire (4).

9. Support d'appareil selon l'une des revendications 1 à 8, moyennant quoi le module intercalaire présente au moins un des éléments : prise d'entrée d'antenne et prise de sortie d'antenne, prise enfichable de module d'antenne (15), prise d'entrée et de sortie de courant, prise d'entrée de signaux audio (10), régulateur de haut-parleur (11) et prise combinée de sortie de données et de charge (17) ainsi que des câblages de passage du courant et des données.

10. Support d'appareil selon une des revendications 1 à 9, moyennant quoi les raccords rapides présentent respectivement des agencements de protubérances (7) de type crochets sur un module respectif et des fentes de réception complémentaires pour la réception par encliquetage des protubérances dans l'autre module respectif.
